# EUROPEAN PATENT APPLICATION

(11) **EP 4 799 933 A1**
(43) Date of publication of application: **02.09.2026**
(21) Application number: 25225435.4
(22) Date of filing: 19.12.2025
(51) Int. Cl.: B64D 13/08, B64D 13/06

(54) **SYSTEM AND METHOD FOR PROVIDING EFFICIENTLY CONDITIONED AIR TO AN INTERNAL CABIN OF AN AIRCRAFT**

(30) Priority: 28.02.2025 US 202519066438
(71) Applicant: The Boeing Company, Arlington, VA 22202 (US)
(72) Inventor: ATKEY, Warren Andrew, ARLINGTON, 22202 (US)
(74) Representative: Plasseraud IP

(57) **Abstract**

An air conditioning system (106) is configured to provide conditioned air (118) to an internal cabin (120) of an aircraft (100). The air conditioning system (106) includes a first fluid circuit (128) configured to receive bleed air (114), a second fluid circuit (150) configured to receive ambient air (154), and a turbo-compressor (138) including a turbine (182) within the first fluid circuit (128) and a compressor (184) within the second fluid circuit (150). The turbine (182) is coupled to the compressor (184) by a shaft.

## Description

### FIELD OF THE DISCLOSURE

Examples of the present disclosure generally relate to systems and methods for providing efficiently conditioned air to an internal cabin of an aircraft.

### BACKGROUND OF THE DISCLOSURE

Commercial aircraft include air conditioning systems, which typically use an air-based thermodynamic cycle to provide cool, pressurized air to various interior compartments of the aircraft, such as the passenger cabin, cargo compartments, and other interior compartments. Air from compressor stages of main aircraft engines, typically referred to as "bleed air," can be bled by a bleed air system from two or more engines to supply pneumatic power to various aircraft and engine systems. For example, bleed air may be used to supply pneumatic power to an air conditioning system, an aircraft anti-ice system, an aircraft hydraulic system, or to other aircraft systems or components.

Bleed air is typically output at a high temperature and a high pressure from the bleed air system of the aircraft engine. Such bleed air can then be cooled and conditioned through air conditioning packs of the air conditioning system. After the bleed air is conditioned in the air conditioning packs, the bleed air can then be distributed into an interior of the aircraft to provide interior temperature control, ventilation, and pressurization. The conditioned air within the interior may then be discharged to the outside ambient environment through various overboard valves, overflow valves, and cabin leaks.

However, the pneumatic energy or power of the bleed air provided by the bleed air system of the engine(s) to the air conditioning system may be decoupled, and not aligned with the power or energy needed by the air conditioning system to meet desired flow and cooling demands. The engine may provide more power than is required by the air conditioning system power requirements. The excess power, when unused, may result in inefficiency and wasted energy.

### SUMMARY OF THE DISCLOSURE

A need exists for a system and a method for efficiently and effectively extracting energy from an aircraft engine, such as to align pneumatic power or energy extracted from bleed air provided by engines with the power or energy demands of an air conditioning system, thereby minimizing or otherwise reducing wasted energy by the air conditioning system.

With that need in mind, certain examples of the present disclosure provide an air conditioning system configured to provide conditioned air to an internal cabin of an aircraft. The air conditioning system includes a first fluid circuit configured to receive bleed air, a second fluid circuit configured to receive ambient air, and a turbo-compressor including a turbine within the first fluid circuit, and a compressor within the second fluid circuit. The turbine is coupled to the compressor by a shaft.

In at least one example, the turbine is rotated by the bleed air. Rotation of the turbine drives the compressor. The compressor compresses the ambient air to provide compressed ambient air. The bleed air is discharged from the first fluid circuit. The compressed ambient air is discharged from the second fluid circuit. The bleed air discharged from the first fluid circuit is mixed with the compressed ambient air discharged from the second fluid circuit to provide conditioned air that is configured to be provided to the internal cabin. In at least one example, the first fluid circuit and the second fluid circuit fluidly connect at a junction. The bleed air discharged from the first fluid circuit is mixed with the compressed ambient air discharged from the second fluid circuit at the junction.

In at least one example, the bleed air is received from a bleed air system that receives the bleed air from one or more engines of the aircraft.

In at least one example, an inlet duct is in fluid communication with the first fluid circuit. The inlet duct is configured to receive the bleed air. A valve can be disposed within the inlet duct. A flow sensor can be disposed within the inlet duct.

In at least one example, a control unit is in communication with one or more valves. The control unit is configured to control operation of the one or more valves. The control unit can also be in communication with one or more sensors, such as flow sensors.

In at least one example, a heat exchanger is upstream from the turbine. The heat exchanger is configured to cool the bleed air.

The air conditioning system can also include an air conditioning pack. In at least one example, at least a portion of the first fluid circuit is within the air conditioning pack. In at least one example, the first fluid circuit includes a portion that is fluidly coupled to one or more components of the air conditioning pack.

In at least one example, the ambient air is received through an air inlet in fluid communication with the second fluid circuit. The air inlet can be a dedicated external scoop of the aircraft, or an external scoop used for other purposed such as an inlet of a ram air circuit of the aircraft.

In at least one example, the second fluid circuit includes a add-heat/surge relief circuit. A valve is disposed within the add-heat/surge relief circuit.

An ozone converter can be disposed within the second fluid circuit.

In at least one example, a heat exchanger is downstream from the compressor. The heat exchanger is configured to cool the compressed ambient air.

Certain examples of the present disclosure provide a method as defined in any of claims 1 to 15, including rotating, by the bleed air, the turbine; driving, by said rotating, the compressor; compressing, by the compressor, the ambient air to provide compressed ambient air; discharging the bleed air from the first fluid circuit; discharging the compressed ambient air from the second fluid circuit; mixing the bleed air discharged from the first fluid circuit with the compressed ambient air discharged from the second fluid circuit to provide conditioned air; and providing the conditioned air to the internal cabin.

Certain examples of the present disclosure provide an aircraft including an internal cabin, one or more engines, a bleed air system configured to receive bleed air from the one or more engines, and an air conditioning system as defined in any of claims 1 to 15, and configured to provide conditioned air to the internal cabin, as described herein.

### BRIEF DESCRIPTION OF THE DRAWINGS

Figure 1 illustrates a simplified block diagram of an aircraft, according to an example of the present disclosure.
Figure 2 illustrates a schematic diagram of an air conditioning system, according to an example of the present disclosure.
Figure 3 illustrates a flow chart of a method, according to an example of the present disclosure.
Figure 4 illustrates a schematic block diagram of a control unit, according to an example of the present disclosure.
Figure 5 illustrates a perspective front view of an aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

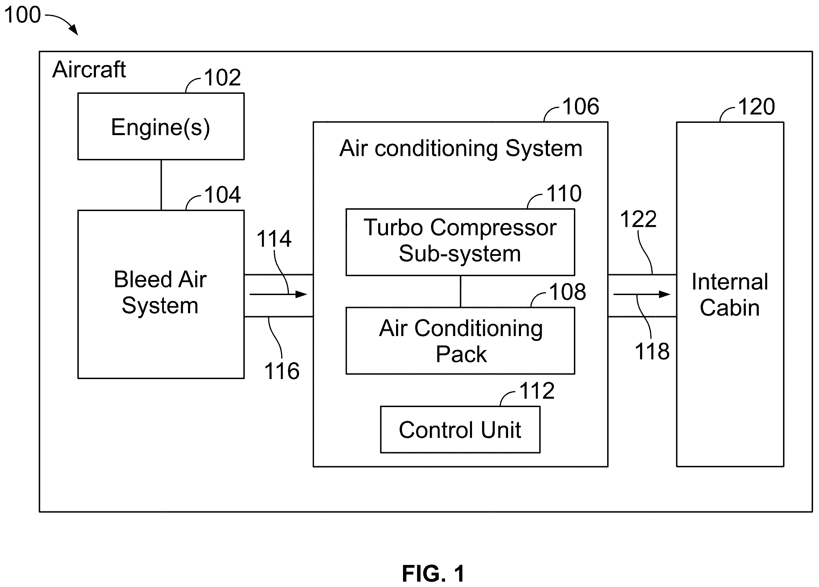

Figure 1 illustrates a simplified block diagram of an aircraft 100, according to an example of the present disclosure. The aircraft 100 includes one or more engines 102 coupled to a bleed air system 104. The aircraft 100 also includes an air conditioning system 106, such as can be housed within a pack bay and/or a fairing of the aircraft 100. The air conditioning system 106 includes an air conditioning pack 108, and a turbo-compressor sub-system 110. In at least one example, the air conditioning system 106 can also include a control unit 112, which is operatively coupled to one or more valves, flow sensors, and/or the like.

The engines 102 generate bleed air, which is received by the bleed air system 104. The bleed air 114 is transported by one or more inlet ducts 116 that fluidly couple the bleed air system 104 with the air conditioning system 106. An example of the bleed air system 104 is described in United States Patent No. 9,656,756, entitled "Turbo-Compressor System and Method for Extracting Energy From an Aircraft Engine," which is hereby incorporated by reference in its entirety. As described herein, the air conditioning system 106 conditions the bleed air 114 to provide conditioned air 118 to an internal cabin 120 of the aircraft through one or more outlet ducts 122, which fluidly couple the air conditioning system to the internal cabin 120.

As described herein, the conditioned air 118 includes mixed air discharged from the turbo-compressor sub-system 110. In at least one example, the mixed air includes bleed air discharged from a first fluid circuit, and ambient air discharged from a second fluid circuit. In at least one example, the conditioned air 118 can also include conditioned air that is discharged from the air conditioning pack 108.

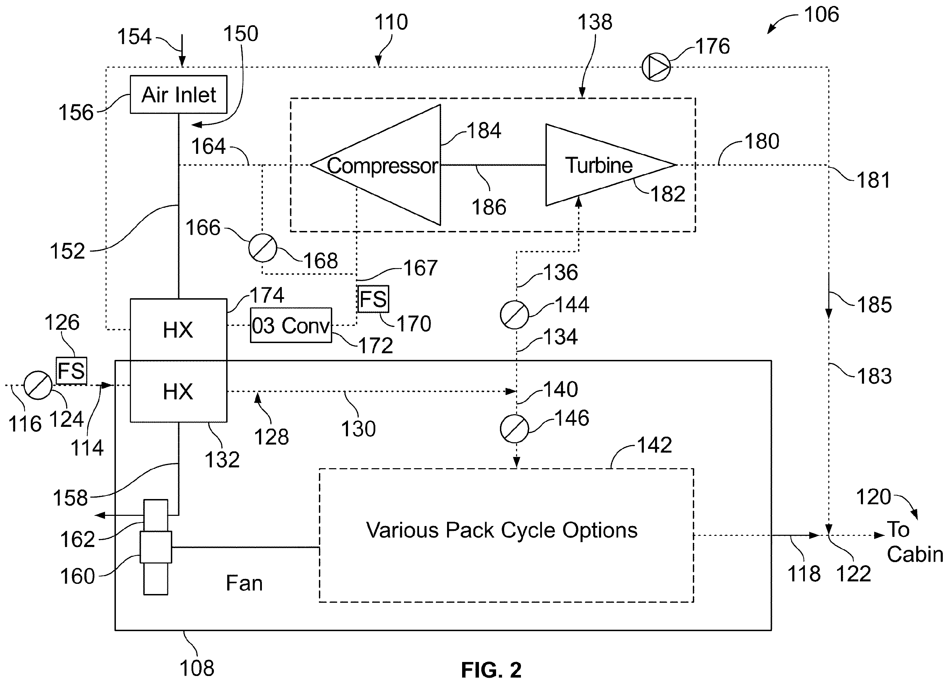

Figure 2 illustrates a schematic diagram of the air conditioning system 106, according to an example of the present disclosure. Referring to Figures 1 and 2, a flow control valve 124 can be disposed within the inlet duct 116. Further, a flow sensor 126 can also be disposed within the inlet duct 116. The control unit 112 is in communication with the flow control valve 124 and the inlet duct 116, such as through one or more wired or wireless connections. The control unit 112 operates the flow control valve 124 to provide a desired amount of bleed air 114 into the air conditioning system 106, such as based on a rate of airflow sensed by the flow sensor 126. Optionally, the inlet duct 116 may not include the flow control valve 124 and/or the flow sensor 126.

The inlet duct 116 is fluidly coupled to a first fluid circuit 128, which includes one or more ducts, tubes, or other such conduits. In at least one example, the first fluid circuit 128 includes an inlet segment 130, such as disposed within the air conditioning pack 108. Optionally, the first fluid circuit 128 and the inlet segment 130 are disposed outside of the air conditioning pack 108. A first heat exchanger 132, such as a primary heat exchanger, is disposed within the inlet segment 130. As shown, the first heat exchanger 132 is upstream from a turbine 182, which is also disposed within the first fluid circuit 128.

The inlet segment 130 fluidly couples to a branching segment 134 having a first portion 136 fluidly coupled to a turbo-compressor 138, and a second portion 140 that branches away from the turbo-compressor 138, and is fluidly coupled to components 142. As shown, a valve 144 is disposed within the first portion 136, and a valve 146 is disposed within the second portion 140. The control unit 112 is in communication with the valves 144 and 146, such as through one or more wired or wireless connections. The control unit 112 is configured to control operation of the valves 144 and 146 to control a desired amount and flow of the bleed air 114 to the turbo-compressor 138 and/or the components 142. The air conditioning pack 108 discharges the conditioned air 118 to the internal cabin 120 through the outlet duct(s) 122.

The air conditioning system 106 also includes a second fluid circuit 150. The second fluid circuit 150 includes an inlet segment 152 that receives ambient air 154 through an air inlet 156. The air inlet 156 can be an external scoop on an outer portion of the aircraft 100. As another example, the air inlet 156 can be an inlet of a ram air circuit of the aircraft 100.

The ram air circuit includes an inlet, heat exchangers, a ram air fan, and an outlet. The inlet of the second fluid circuit 150 can be the inlet of the ram air circuit. Optionally, the inlet of the second fluid circuit 150 can be a separate, independent dedicated ram air inlet. The inlet segment 152 can connect to a segment 158 that is fluidly connected to an air cycle machine fan 160 and a ram air outlet 162. Optionally, the inlet segment 152 is not in fluid communication with the outlet segment 158.

The inlet segment 152 is fluid coupled to a branching segment 164 that fluidly connects to the turbo-compressor 138. The branching segment 164 is in fluid communication with an add-heat/surge relief circuit 166 upstream from the turbo-compressor 138. The turbo-compressor 138 is also in fluid communication with an outlet segment 167. The branching segment 164 is also in fluid communication with the outlet segment 167. As shown, a valve 168 is disposed within the add-heat/surge relief circuit 166. The control unit 112 is in communication with the valve 168, such as through one or more wired or wireless connections. The control unit 112 is configured to control operation of the valve 168. The valve 168 can be an add heat valve, which provides surge relief and temperature control. Optionally, the air conditioning system 106 may not include the valve 168 and/or the add-heat/surge relief circuit 166.

As shown, a flow sensor 170 can be disposed within the outlet segment 167. The flow sensor 170 is configured to sense a rate of airflow through the outlet segment 167. The control unit 112 is in communication with the flow sensor 170, such as through one or more wired or wireless connections. The valve 168 can be controlled via feedback from a compressor discharge temperature sensor (not shown) and optionally via logic associated with start-up or shutdown and/or in conjunction with other pressure sensors (not shown). The flow sensor 170 allows the system to have complete knowledge of the total pack airflow being provided to an internal cabin of the aircraft. The total pack airflow is the combination of flow as detected by the flow sensor 170, flow and flow as detected by a flow sensor downstream from a flow control valve. The sum of such values provides the feedback for closed loop control of one or more flow control valves, such as the valve 168. As another example, a variable turbine nozzle can be disposed at the inlet of the turbine 182. Optionally, the air conditioning system 106 may not include the flow sensor 170.

An ozone converter 172 can be disposed within the outlet segment 167. The ozone converter 172 is configured to extract and remove ozone within air flowing through the outlet segment 167. For example, outside ambient air at high altitudes can include ozone. The ozone converter 172 removes the ozone, so that air supplied to the internal cabin 120 does not exceed acceptable ozone concentrations.

A heat exchanger 174 is also disposed within the outlet segment 167. As shown, the heat exchanger 174 is disposed within the second fluid circuit 150 downstream from a compressor 184. Further, a check valve 176 can be disposed within the outlet segment 167 downstream from the heat exchanger 174.

The outlet segment 167 fluidly couples to an outlet segment 180 fluidly coupled to the turbo-compressor 138 at a junction 181. The first fluid circuit 128 and the second fluid circuit 150 fluidly connect at the junction 181, which connects to a cabin outlet duct 183, which fluidly connects to the outlet duct(s) 122.

The turbo-compressor 138 includes the turbine 182 connected to the compressor 184 through a shaft 186. The turbine 182 is in fluid communication with the branching segment 134 and the outlet segment 180 of the first fluid circuit 128. For example, the turbine 182 is between the branching segment 134 and the outlet segment 180. As such, the first fluid circuit 128 includes the turbine 182. The turbine 182 is disposed within the first fluid circuit 128.

The compressor 184 is in fluid communication with the branching segment 164 and the outlet segment 167 of the second fluid circuit 150. For example, the compressor 184 is between the branching segment 164 and the outlet segment 167. Accordingly, the second fluid circuit 150 includes the compressor 184. The compressor 184 is within the second fluid circuit 150.

As shown, the turbo-compressor sub-system 110 is in parallel with the air conditioning pack 108. In operation, the bleed air 114 is drawn into the first fluid circuit 128. In at least one example, the control unit 112 operates the valve 124 to control a desired amount of the bleed air 114 into the first fluid circuit 128, such as based on a flow rate, as detected by the flow sensor 126. Optionally, the system may not include the valve 124. Instead, valves 144 and 146 can provide flow control. The systems shown and described can include more or fewer sensors and valves than shown.

The heat exchanger 132 conditions the bleed air 114, such as by cooling the bleed air 114. The bleed air 114 passes through the first fluid circuit 128 into the turbine 182. A portion of the bleed air 114 can also pass into one or more components 142 of the air conditioning pack 108, based on control of the valves 144 and 146.

As the bleed air 114 passes into the turbine 182, the bleed air 114 rotates the turbine 182. The bleed air 114 then passes through the first fluid circuit 128 into the outlet segment 180, and then into the junction 181.

Rotation of the turbine 182 causes the shaft 186 to rotate, which, in turn, rotates the compressor 184. As such, the compressor 184 draws in the ambient air 154 through the air inlet 156, and into the second fluid circuit 150. The ambient air 154 can be from a ram inlet, which may be modulated, such as to reduce spillage, drag, and instability. The ambient air 154 passes into the compressor 184, which compresses the ambient air 154. The compressed ambient air 154 passes through the ozone converter 172, which removes ozone from the compressed ambient air 154. The heat exchanger 174 conditions the compressed ambient air 154, such as by cooling the compressed ambient air 154. The check valve 176 ensures that airflow does not reverse back toward upstream components, particularly when the turbo-compressor 138 is not in use. Instead, the compressed ambient air 154 passes through the second fluid circuit 150 into the junction 181, where the compressed ambient air 154 mixes with the bleed air 114 (and conditioned air 118 from the air conditioning pack(s) 108), and is then supplied to the internal cabin 120 through the outlet duct(s) 122.

As described herein, the air conditioning system 106 includes the first fluid circuit 128 that receives the bleed air 114, and the second fluid circuit 150, which receives the ambient air 154 (such as ram air). The air conditioning system 106 further includes the turbo-compressor 138, which includes the turbine 182 in the first fluid circuit 128, and the compressor 184 in the second fluid circuit 150. The bleed air 114 causes the turbine 182 to rotate, which thereby rotates the compressor 184. In turn, the compressor 184 draws in the ambient air 154, and compresses the ambient air 154. The ambient air 154, as compressed by the compressor 184, and the bleed air 114 (which rotates the turbine 182) is then mixed at the junction 181. Mixed air 185 (that is, conditioned air including the bleed air 114, the compressed ambient air 154, and the conditioned air 118) is then supplied to the internal cabin 120 through the outlet duct(s) 122.

As described herein, the turbo-compressor sub-system 110 includes the turbo-compressor 138, which is configured to minimize or otherwise reduce engine pneumatic power extraction, while achieving cabin pressurization, ventilation, and air conditioning demands for the internal cabin 120 of the aircraft 100. The turbo-compressor 138 operates to harvest excess engine pneumatic pressure (as provided from the bleed air 114) to reduce power extraction via engine bleed mass flow reductions. The heat exchangers 132 and 174 can be used to extract thermal energy from internal airflow. The turbine 182 cools the bleed air 114 making the mixed air 185 suitable (sufficiently cool) for cabin air conditioning while also generating power to drive the compressor 184. In turn, the compressor 184 compresses the ambient air 154 (such as ambient ram air), and the compressed ambient air 154 is then cooled through the heat exchanger 174. The compressed, cooled air is then mixed with the bleed air 114, which is discharged from the turbine 182, and the mixed air 185 (that is, the conditioned air) is then fed to the internal cabin 120. The compressed ambient (for example, ram) air allows for a reduction in engine bleed air flow, thereby reducing both engine power extraction and fuel burn. In at least one example, the turbo-compressor sub-system 110 operates in tandem with the air conditioning pack 108 to ensure the air conditioning needs for the internal cabin 120 are satisfied for an entire operational envelope and under a myriad of normal and failure conditions.

In at least one example, the turbo-compressor system described herein can be used in parallel with additional air conditioning pack equipment. In at least one example, the turbo-compressor system performs air conditioning operations while the aircraft is in-flight. An operational envelope of the turbo-compressor system may be limited by altitude and ambient temperature. As such, additional equipment, such as components of traditional air cycle systems, may be used to provide the air conditioning function outside of the turbo-compressor operational envelope, such as during ground and low altitude operation.

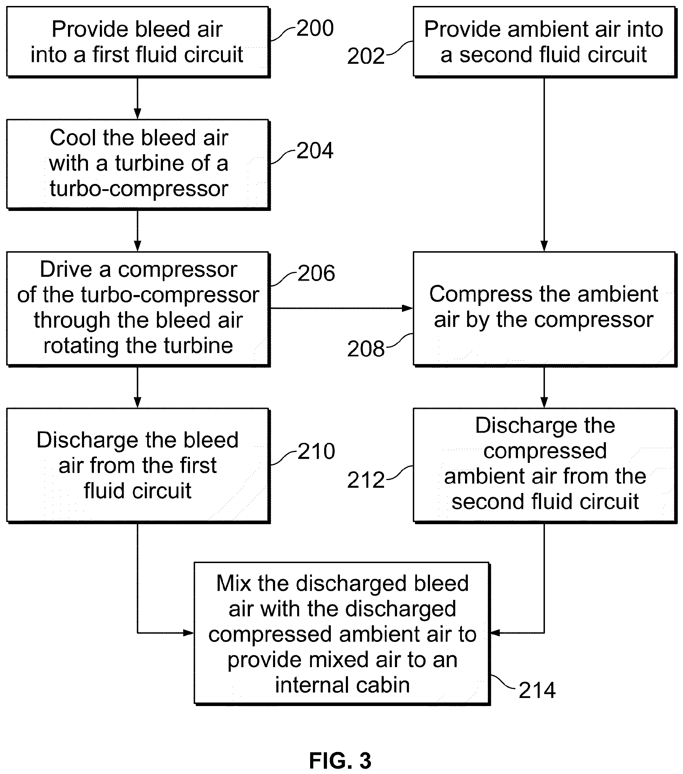

Figure 3 illustrates a flow chart of a method, according to an example of the present disclosure. Referring to Figures 1-3, at 200, the bleed air 114 is provided into the first fluid circuit 128, such as from the bleed air system 104, which draws the bleed air 114 from one or more engines 102 of the aircraft 100 At 202, the ambient air 154 is provided into the second fluid circuit 150, such as from a ram air circuit, an external air inlet, scoop, and/or the like of the aircraft 100. Steps 200 and 202 can occur simultaneously.

At 204, the bleed air 114 is cooled with the turbine 182 of the turbo-compressor 138. At the same time, at 206, the bleed air 114 (which is being cooled by the turbine 182) drives the compressor 184 of the turbo-compressor 138 through the bleed air 114 rotating the turbine 182 (which is coupled to the compressor 184 by the shaft 186). At 208, the driven compressor 184 compresses the ambient air 154.

At 210, the bleed air 114 is discharged from the first fluid circuit 128, such as downstream from the turbine 182 (into the segment 180). At 212, the compressed ambient air 154 is discharged from the second fluid circuit 150, such as downstream from the compressor 184 (into the segment 167). At 214, the discharged bleed air 114 and the discharged compressed ambient air 154 are mixed together, such as at the junction 181, to provide the mixed air 185 (that is, conditioned air) to the internal cabin 120.

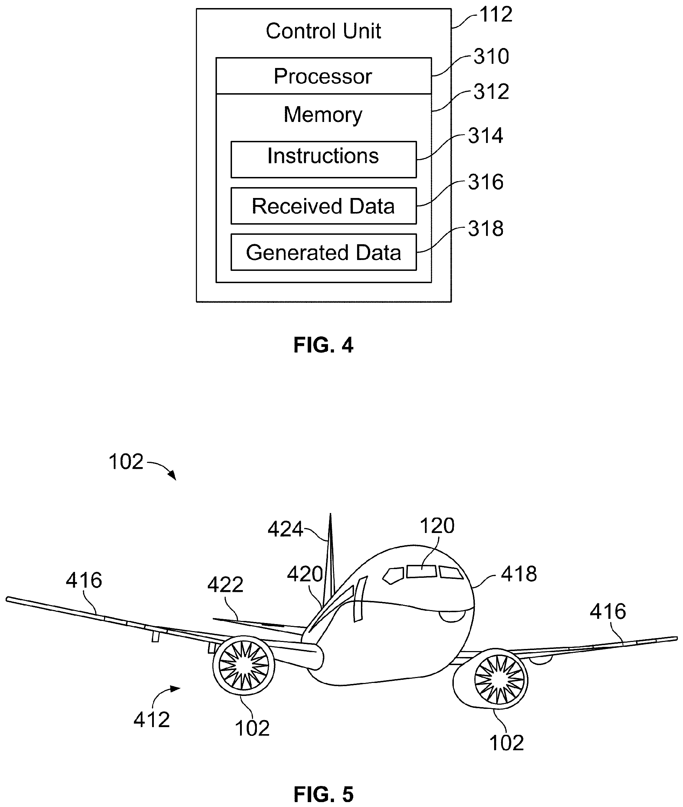

Figure 4 illustrates a schematic block diagram of the control unit 112, according to an example of the present disclosure. In at least one example, the control unit 112 includes at least one processor 310 in communication with a memory 312. The memory 312 stores instructions 314, received data 316, and generated data 318. The control unit 112 also received input from the sensors, and provides output to effectors, such as valves or actuators. The control unit 112 shown in Figure 4 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 112 may be or include one or more processors that are configured to control operation, as described herein.

The control unit 112 is configured to execute a set of instructions that are stored in one or more data storage units or elements (such as one or more memories), in order to process data. For example, the control unit 112 may include or be coupled to one or more memories. The data storage units may also store data or other information as desired or needed. The data storage units may be in the form of an information source or a physical memory element within a processing machine.

The set of instructions may include various commands that instruct the control unit 112 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 112. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 112 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Figure 5 illustrates a perspective front view of the aircraft 100, according to an example of the present disclosure. The aircraft 100 includes a propulsion system 412 that includes engines 102, for example. Optionally, the propulsion system 412 may include more engines 102 than shown. The engines 102 are carried by wings 416 of the aircraft 100. In other examples, the engines 102 may be carried by a fuselage 418 and/or an empennage 420. The empennage 420 may also support horizontal stabilizers 422 and a vertical stabilizer 424. The fuselage 418 of the aircraft 100 defines an internal cabin 120, which includes a flight deck or cockpit, one or more work sections (for example, galleys, personnel carry-on baggage areas, and the like), one or more passenger sections (for example, first class, business class, and coach sections), one or more lavatories, and/or the like. Figure 5 shows an example of an aircraft 100. It is to be understood that the aircraft 100 can be sized, shaped, and configured differently than shown in Figure 5.

Further, the disclosure comprises, without limitation, the following examples:
Example 1. An air conditioning system configured to provide conditioned air to an internal cabin of an aircraft, the air conditioning system comprising:
   a first fluid circuit configured to receive bleed air;
   a second fluid circuit configured to receive ambient air; and
   a turbo-compressor including a turbine within the first fluid circuit, and a compressor within the second fluid circuit, wherein the turbine is coupled to the compressor by a shaft.
Example 2. The air conditioning system of example 1, wherein the turbine is configured to be rotated by the bleed air, wherein rotation of the turbine drives the compressor, wherein the compressor is configured to compress the ambient air to provide compressed ambient air, wherein the bleed air is configured to be discharged from the first fluid circuit, wherein the compressed ambient air is configured to be discharged from the second fluid circuit, wherein the bleed air being discharged from the first fluid circuit is configured to be mixed with the compressed ambient air discharged from the second fluid circuit to provide conditioned air to the internal cabin.
Example 3. The air conditioning system of example 2, wherein the first fluid circuit and the second fluid circuit fluidly connect at a junction, and wherein the bleed air discharged from the first fluid circuit is mixed with the compressed ambient air discharged from the second fluid circuit at the junction.
Example 4. The air conditioning system of any of examples 1-3, wherein the bleed air is received from a bleed air system that receives the bleed air from one or more engines of the aircraft.
Example 5. The air conditioning system of any of examples 1-4, further comprising:
   an inlet duct in fluid communication with the first fluid circuit, wherein the inlet duct is configured to receive the bleed air;
   a valve disposed within the inlet duct; and
   a flow sensor disposed within the inlet duct.
Example 6. The air conditioning system of any of examples 1-5, further comprising a control unit in communication with one or more valves, wherein the control unit is configured to control operation of the one or more valves.
Example 7. The air conditioning system of any of examples 1-6, further comprising a heat exchanger upstream from the turbine, wherein the heat exchanger is configured to cool the bleed air.
Example 8. The air conditioning system of any of examples 1-7, further comprising an air conditioning pack.
Example 9. The air conditioning system of example 8, wherein at least a portion of the first fluid circuit is within the air conditioning pack.
Example 10. The air conditioning system of example 9, wherein the first fluid circuit comprises a portion that is fluidly coupled to one or more components of the air conditioning pack.
Example 11. The air conditioning system of any of examples 1-10, wherein the ambient air is received through an air inlet in fluid communication with the second fluid circuit.
Example 12. The air conditioning system of example 11, wherein the air inlet is one of an external scoop of the aircraft or an inlet of a ram air circuit of the aircraft.
Example 13. The air conditioning system of any of examples 1-12, wherein the second fluid circuit comprises a add-heat/surge relief circuit, and wherein a valve is disposed within the add-heat/surge relief circuit.
Example 14. The air conditioning system of any of examples 1-13, further comprising an ozone converter disposed within the second fluid circuit.
Example 15. The air conditioning system of any of examples 1-14, further comprising a heat exchanger downstream from the compressor, wherein the heat exchanger is configured to cool the ambient air.
Example 16. A method for an air conditioning system configured to provide conditioned air to an internal cabin of an aircraft, the air conditioning system comprising:
   a first fluid circuit configured to receive bleed air;
   a second fluid circuit configured to receive ambient air; and
   a turbo-compressor including a turbine within the first fluid circuit and a compressor within the second fluid circuit, wherein the turbine is coupled to the compressor by a shaft,
   the method comprising:
      rotating, by the bleed air, the turbine;
      driving, by said rotating, the compressor;
      compressing, by the compressor, the ambient air to provide compressed ambient air;
      discharging the bleed air from the first fluid circuit;
      discharging the compressed ambient air from the second fluid circuit;
      mixing the bleed air discharged from the first fluid circuit with the compressed ambient air discharged from the second fluid circuit to provide conditioned air; and
      providing the conditioned air to the internal cabin.
Example 17. An aircraft comprising:
   an internal cabin;
   one or more engines;
   a bleed air system configured to receive bleed air from the one or more engines; and
   an air conditioning system configured to provide conditioned air to the internal cabin, the air conditioning system comprising:
      a first fluid circuit configured to receive bleed air, wherein the first fluid circuit comprises a first heat exchanger;
      a second fluid circuit configured to receive ambient air, wherein the second fluid circuit comprises a second heat exchanger and an ozone converter;
      a turbo-compressor including a turbine within the first fluid circuit and a compressor within the second fluid circuit, wherein the turbine is coupled to the compressor by a shaft, wherein the first heat exchanger is upstream from the turbine, and wherein the second heat exchanger is downstream from the compressor;
      an air conditioning pack; and
      a control unit in communication with one or more valves, wherein the control unit is configured to control operation of the one or more valves.
Example 18. The aircraft of example 17, wherein the turbine is configured to be rotated by the bleed air, wherein rotation of the turbine drives the compressor, wherein the compressor is configured to compress the ambient air to provide compressed ambient air, wherein the bleed air is configured to be discharged from the first fluid circuit, wherein the compressed ambient air is configured to be discharged from the second fluid circuit, wherein the bleed air discharged from the first fluid circuit is configured to be mixed with the compressed ambient air discharged from the second fluid circuit to provide conditioned air to the internal cabin.
Example 19. The aircraft of examples 17 or 18, wherein the first fluid circuit and the second fluid circuit fluidly connect at a junction, and wherein the bleed air discharged from the first fluid circuit is mixed with the compressed ambient air discharged from the second fluid circuit at the junction.
Example 20. The aircraft of any of examples 17-19, wherein at least a portion of the first fluid circuit is within the air conditioning pack, and wherein the first fluid circuit comprises a portion that is fluidly coupled to one or more components of the air conditioning pack.

As described herein, examples of the present disclosure provide systems and methods for efficiently and effectively extracting energy from an aircraft engine, such as to align pneumatic power or energy extracted from bleed air provided by engines with the power or energy demands of an air conditioning system, thereby minimizing or otherwise reducing wasted energy by the air conditioning system, and for providing ram air drag savings.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims

## Claims

1. An air conditioning system (106) configured to provide conditioned air (118) to an internal cabin (120) of an aircraft (100), the air conditioning system (106) comprising:
a first fluid circuit (128) configured to receive bleed air (114);
a second fluid circuit (150) configured to receive ambient air (154); and
a turbo-compressor (138) including a turbine (182) within the first fluid circuit (128), and a compressor (184) within the second fluid circuit (150), wherein the turbine (182) is coupled to the compressor (184) by a shaft.

2. The air conditioning system (106) of claim 1, wherein the turbine (182) is configured to be rotated by the bleed air (114), wherein rotation of the turbine (182) drives the compressor (184), wherein the compressor (184) is configured to compress the ambient air (154) to provide compressed ambient air (154), wherein the bleed air (114) is configured to be discharged from the first fluid circuit (128), wherein the compressed ambient air (154) is configured to be discharged from the second fluid circuit (150), wherein the bleed air (114) being discharged from the first fluid circuit (128) is configured to be mixed with the compressed ambient air (154) discharged from the second fluid circuit (150) to provide conditioned air (118) that provided to the internal cabin (120).

3. The air conditioning system (106) of claim 1 or 2, wherein the first fluid circuit (128) and the second fluid circuit (150) fluidly connect at a junction (181), and wherein the bleed air (114) being discharged from the first fluid circuit (128) is mixed with the compressed ambient air (154) discharged from the second fluid circuit (150) at the junction (181).

4. The air conditioning system (106) of any of claims 1 to 3, wherein the bleed air (114) is received from a bleed air (114) system (104) that receives the bleed air (114) from one or more engines (102) of the aircraft (100).

5. The air conditioning system (106) of any of claims 1 to 4, further comprising:
an inlet duct in fluid communication with the first fluid circuit (128), wherein the inlet duct is configured to receive the bleed air (114);
a valve (144, 168) disposed within the inlet duct; and
a flow sensor (126, 170) disposed within the inlet duct.

6. The air conditioning system (106) of any of claims 1 to 5, further comprising a control unit (110) in communication with one or more valves (144, 168), wherein the control unit (110) is configured to control operation of the one or more valves (144, 168).

7. The air conditioning system (106) of any of claims 1 to 6, further comprising a heat exchanger (174) upstream from the turbine (182), wherein the heat exchanger (174) is configured to cool the bleed air (114).

8. The air conditioning system (106) of any of claims 1 to 7, further comprising an air conditioning pack (108).

9. The air conditioning system (106) of claim 8, wherein at least a portion of the first fluid circuit (128) is within the air conditioning pack (108).

10. The air conditioning system (106) of claim 9, wherein the first fluid circuit (128) comprises a portion that is fluidly coupled to one or more components (142) of the air conditioning pack (108).

11. The air conditioning system (106) of any of claims 1 to 10, wherein the ambient air (154) is received through an air inlet (156) in fluid communication with the second fluid circuit (150).

12. The air conditioning system (106) of claim 11, wherein the air inlet (156) is one of an external scoop of the aircraft (100) or an inlet of a ram air circuit of the aircraft (100).

13. The air conditioning system (106) of any of claims 1 to 12, wherein the second fluid circuit (150) comprises a add-heat/surge relief circuit, and wherein a valve (144, 168) is disposed within the add-heat/surge relief circuit.

14. The air conditioning system (106) of any of claims 1 to 13, further comprising an ozone converter (172) disposed within the second fluid circuit (150).

15. The air conditioning system (106) of any of claims 1 to 14, further comprising a heat exchanger (174) downstream from the compressor (184), wherein the heat exchanger (174) is configured to cool the ambient air (154).

16. A method for performing an air conditioning system (106) of any of claims 1 to 15,
the method comprising:
rotating, by the bleed air (114), the turbine (182);
driving, by said rotating, the compressor (184);
compressing, by the compressor (184), the ambient air (154) to provide compressed ambient air (154);
discharging the bleed air (114) from the first fluid circuit (128);
discharging the compressed ambient air (154) from the second fluid circuit (150);
mixing the bleed air (114) discharged from the first fluid circuit (128) with the compressed ambient air (154) discharged from the second fluid circuit (150) to provide conditioned air (118); and
providing the conditioned air (118) to the internal cabin (120).

17. An aircraft (100) comprising:
an internal cabin (120);
one or more engines (102);
a bleed air (114) system (104) configured to receive bleed air (114) from the one or more engines (102); and
an air conditioning system (106) of any of claims 1 to 15,
an air conditioning pack (108); and
a control unit (110) in communication with one or more valve (144, 168)s, wherein the control unit (110) is configured to control operation of the one or more valve (144, 168)s.
